# EUROPEAN PATENT APPLICATION

(11) **EP 4 253 349 A1**
(43) Date of publication of application: **04.10.2023**
(21) Application number: 21897251.1
(22) Date of filing: 25.11.2021
(51) Int. Cl.: C04B 41/80, E04F 13/14, E04F 13/30, E04F 15/08, B32B 7/025

(54) **MAGNETIC CLADDING FOR COVERING STRUCTURES AND MAGNETIC ADHESION SYSTEM**

(30) Priority: 25.11.2020 ES 202032561 U; 12.08.2021 ES 202131669 U
(71) Applicant: Coloronda, S.L., 12200 Onda (Castellón) (ES); Power Synergy, S.L., 12221 Tales (Castellón) (ES)
(72) Inventor: JOVANÍ BELTRÁN, Marcos, 12006 Castellón de la Plana (Castellón) (ES); GARCÍA MONSONÍS, Javier, 12530 Burriana (Castellón) (ES)
(74) Representative: Martin Santos, Victoria Sofia
(86) International application number: PCT/ES2021/070852
(87) International publication number: WO 2022/112639

(57) **Abstract**

Disclosed is an installation system by magnetic adherence of cladding and covering structures with magnetic properties for supports such as ceramic substrates that is especially suitable for placement on ceramic pieces, as well as on supports of another nature, providing them with magnetic adherence on surfaces with a magnetic field intense by alignment of their magnetic domains.

## Description

### Field of the invention

The present invention refers both to the installation system by magnetic adhesion of cladding and/or floorings structures, associated with the application of a coating with ferromagnetic properties designed exclusively for said purpose, as well as to the ferromagnetic coating itself.

### Background of the invention

The present invention benefits and claims the priority right for the protection of an invention by means of the Spanish utility model application number 202032561, filed on 25 November 2020 for a "Coating with magnetic properties for ceramic substrates" ["Recubrimiento con propiedades magnéticas para sustratos ceramicos"]. This invention refers to a coating with magnetic properties which is especially suitable for use on on ceramic pieces, thus providing the ceramic pieces with a magnetic adherence on surfaces with an intense magnetic field by alignment of its magnetic domains; and fundamentally intended to provide magnetic characteristics mainly to ceramic supports, however the invention is also applicable to other supports of a different nature, such as metals or plastics; it is especially characterized in that the nature of the coating is inorganic and ti is composed of alpha iron crystals with a body-centered cubic crystalline structure, or by having inorganic/organic hybrid nature composed of polymers, and/or combinations thereof and alpha iron crystals.

Patent documents ES1232466U and US 2018/0257340 describe a magnetic adhesion system in a system for mounting plates on a floorings surface and/or coating of different nature, the rear faces of the plates and the floorings surface and/or coating configured to be joined together by magnetism, this magnetism is being comprised in selected elements between first ferromagnetic elements incorporated into the plates, and second ferromagnetic elements incorporated into the support surfaces. Such ferromagnetic elements adhere to the surface of the coating substrates or to the support surfaces by generally mechanical adhesion interfaces.

There other earlier relevant documents, which describe a similar adhesion system. Document ES1025004U discloses a tile connection unit or similar elements with a display panel. This connection unit includes a plate made of ferromagnetic material. One or more zones of the tile base is integral with a connecting means comprised of a ferromagnetic material plate and located parallel to the surface placement of the tile. For adherence of the tile and the plate, it would be sufficient to interpose between each plate and the plate, a sheet that is preferably made of a flexible material, constituted by a permanent magnet. An embodiment in which similar sheets of thise kind could be glued directly against the surface of the tile with a layer of ferromagnetic adhesive material, in this case is also posed.

Document WO2008121806A1 describes a covering element that can be attached to a floor, wall or ceiling or any other surface by a magnetic force in the form of a ferromagnetic substrate. The element is formed by an intermediate textile sheet, interposed between a flexible magnetic sheet located on the back face and a flexible layer made of a decorative material. The plates are magnetically attached to a substrate, surface, or ferromagnetic piece that is attached to or forms part of a wall, floor, ceiling, furniture, or ornamentation.

Document US2017254094A1 describes a floor system, although it is indicated that it also has applicability in wall coatings. The first sheet of the floor, which rests directly on the structure thereof, has a top layer with a magnetizable material. A second sheet is placed on this sheet having an outer finishing layer, which is the surface layer and a second bottom layer, which is also of a magnetizable material. In this document the possibility of a magnetized intermediate plate is interposed, whereby some of the above layers may be ferromagnetic elements and not initially magnetized.

Document US2008202053A1 discloses magnetic plates for installation along with one another on a wall surface having magnetic properties. Said plate will have a front and other rear surface, the latter having a sheet of magnetic material. In another embodiment of the invention, the magnetic properties of the plates and the surface may be reversed.

Document GB2564104A refers to a system for making floorings, which comprises a plurality of elements for the floor that include a magnetic element on a lower face. These elements are fixed to a surface that is part of a building and that is made of magnetic metallic material. The attraction between the magnetic elements and the surface serves to hold the pavement elements in position.

With the exception of the Spanish utility model application number 202032561, all these documents refer to reversible installation systems for coatings and/or floorings of different types, using magnetic forces as an element of adherence of coatings with a decorative function on surfaces to cover in decoration.

All of them require interfaces for adherence by adhesive materials or by mechanical methods, of ferromagnetic materials to the substrate. These techniques are complicated and difficult, and therefore represent an drawback since they require additional steps in the production process of the coatings and/or flooring, in this case for the inclusion and/or adherence of the magnetic materials to the support, which causes higher costs and longer processing time.

Similar coating applications exist, as disclosed in European patent EP1857993 A2, in which the ferromagnetic property is provided to the support by applying a polymeric substrate followed by one ferromagnetic mineral coating, for potential use in advertising billboards, traffic signals, and other type of applications.

Therefore, it is not known in the state of art of any material capable of providing magnetic characteristics to a support without the complementing additional adherence processes. Consequently at the time of the drafting of the present disclosure, the inventors are not aware of the existence of other installation methods that make use of ferromagnetic coatings without the need for adhesive and/or mechanical interfaces to the substrate, and consequently also nor does not know of the existence of ferromagnetic polymeric coatings designed exclusively for this purpose that will facilitate their use, more specifically in coating production lines and/or ceramic floorings, being also susceptible to being applied on coatings of different nature.

This singularity gives value and difference to the present invention, it being a novel application without the need for adherence steps of the ferromagnetic material through mechanical and/or adhesive interfaces for its subsequent installation, making use of magnetic forces as an adherence element.

This fact, derives from the difficulty of using ferromagnetic materials in high temperature applications, well above the Curie temperature (Tc) of the ferromagnetic materials, as are ceramic cooking cycles.

Ferromagnetism is a physical phenomenon in which magnetic ordering of all the magnetic moments of a sample occurs, in the same direction and sense. The ferromagnetic interaction is the magnetic interaction that causes the magnetic moments to tend to be arranged in the same direction and sense. It must extend through the entire volume of a solid for the solid to achieve the property of ferromagnetism.

Generally, ferromagnetics are divided into magnetic domains, separated by surfaces known as Bloch walls. In each of these domains, all the magnetic moments are aligned. At domain boundaries there is some potential energy, but the domain formation is offset by the gain in entropy.

When a ferromagnetic material is subjected to an intense magnetic field, the domains tend to align with it, such that those domains in which the dipoles are oriented with the same sense and direction as the inducing magnetic field increase in size. This increase in size is explained by the characteristics of the Bloch walls, which advance in the direction of the domains whose direction of the dipoles does not coincide; giving rise to monodomins. By eliminating the field, the domain remains for a certain time.

Ferrimagnetism is a subtle variation of ferromagnetism, where the magnetic ordering does not exhibit an alignment in the same direction and sense of all magnetic moments. These materials lose their magnetism above a certain temperature, the curie temperature (Tc), which is the temperature above which a ferromagnetic body loses its magnetism, behaving like a purely paramagnetic material [(Wolhlfarth, E.P., Ferromagnetic Materials (North-Holland, 19080) and Kittel, Charles: Introduction to Solid State Physics (Wiley: New York, 1996)].

In view of the existing problems in the state of the art, one purpose of the present invention is to overcome the current drawbacks by providing a magnetic coating and a magnetic adhesion installation system for cladding structures comprising the coating, in such a way as to avoid problems such as the formation of dust in the work zone, the noise that is generated with the conventional installations of cladding structures, etc.

### Object and description of the invention

In the present description and claims, any reference to the terms "magnetic", "magnetism" and the like includes both ferromagnetism and ferrimagnetism.

In addition, the terms "ferromagnetism" or "ferromagnetic" refer to both "ferromagnetism" or "ferromagnetic materials" and ferrimagnetism or "ferrimagnetic" materials, respectively.

The term "coating" refers to a composition that is applied to a support so that together they form a coating structure, once the coating has been applied to the support. That is, the coating is the magnetic enamel of the invention.

The expression "decorative body" is another expression that is equivalent to "support"

The term "coating structure" is used to designate the part resulting from applying the magnetic coating to the support, therefore, the coating structure comprises the support and the magnetic coating joined together to form a single body. In addition, the expression "coating structure" refers herein to both wall and floor coverings, although it is not explicitly indicated. The term "pavement or floorings" is also mentioned on occasions.

There are other products in the market such as layers (film) that "adhere" to a tile in order to instal or place it using its magnetic properties to a structure. The difference is that the coating of the present invention forms a single body with the support, such as a tile (it cannot be detached).

The expressions "ceramic piece" and "ceramic substrate" are equivalent in this specification and refer to an exemplary embodiment of the support. An example of a ceramic piece is a tile that, when the coating of the invention is placed on it, becomes a coating structure that can be called "magnetic tile" or with magnetic properties.

The term "glass ceramic" is used equivalently to "inorganic coating".

A first object of the invention is a coating with magnetic properties for cladding structures, characterized in that it comprises:
- frit
- one or more base materials
- an inorganic material with magnetic properties.

Base materials can be, for example, selected from silicon oxide, zirconium silicate, aluminum oxide, zinc oxide, silicon nitride, calcium carbonate, cerium oxide, mullite, kaolin, sodium feldspar, wollastonite, nepheline , praseodymium oxide, barium oxide, boron oxide, magnesium carbonate, clay, strontium carbonate, silicon carbide and industrial residues.

The frit refers to frits with the components known in the state of art.

The components of the coating can be present in different proportions, such as: between 45 and 85%, preferably between 50 and 80% of magnetic materials, between 3% and 27%, preferably between 5% and 20% of frit and between 3% and 23%, preferably 5% and 20% of base materials, with respect to the total weight of the coating.

The coating with magnetic properties for cladding structures, according to particular embodiments, is characterized in that it comprises an inorganic material with magnetic properties selected from:
- a material comprising alpha iron crystals, with a body-centered cubic crystal structure, selected from the group consisting of magnetite (Fe₃O₄), hematite (Fe₂O₃), strontium hexaferrite (SrFe₁₂O₁₉), barium hexaferrite (BaFe₁₂O₁₉), metallic iron, neodymium iron boron alloy (NdFeB), and stainless steels,
- an inorganic material of a metallic nature lacking of iron, selected from:
   - cobalt oxides (CoO, Co₃O₄),
   - manganese fluoride (MnF),
   - metallic nickel,
   - nickel aluminum cobalt alloys (AlNiCo).

Some stainless steels can be considered as a magnetic material, such as the families of stainless steels, known as ferritic, martensitic and/or duplex steels, which exhibit magnetism and therefore are recognized as magnetic materials, for example, in this case, steel stainless steel, magnetite, strontium hexaferrite and hematite. In addition, other types of steels, at high firing temperatures and slow cooling, may exhibit some transformation into alpha iron among others, which will show magnetic attraction compared to permanent magnets.

The invention provides a coating for obtaining a coating structure, said coating is of an inorganic, glass-ceramic or hybrid inorganic/organic nature, depending on the desired application and the firing temperature of the cladding structures.

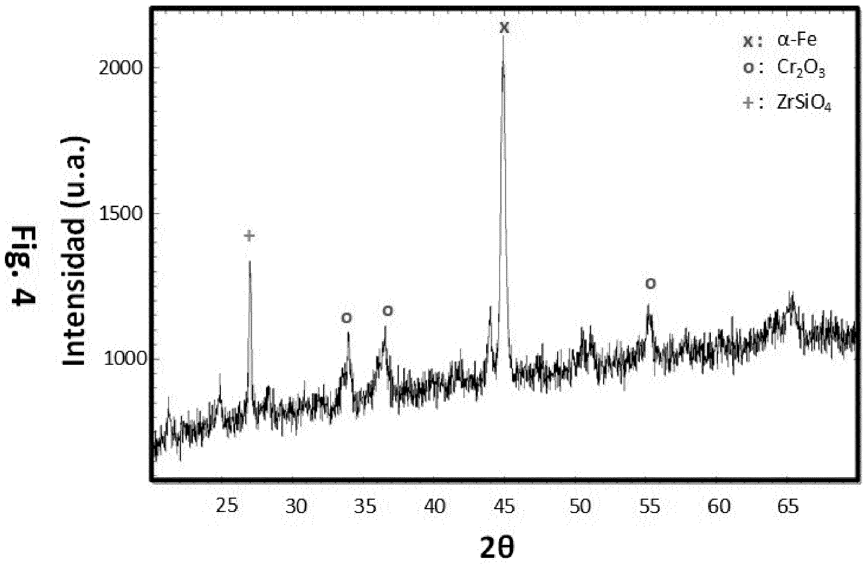

The coating with magnetic properties, according to particular embodiments, comprises crystals of alpha iron or ferrite, where the position of the atoms corresponds to a body-centered cubic crystalline arrangement system ([BCC for its acronym in English of "body centered cubic" arrangement] (see figure 4)), and can be inorganic or hybrid inorganic/organic in nature, depending on the desired application and the firing temperature of the ceramic pieces.

The magnetic coating of the invention may also comprise an organic component, such as a polymer selected from polyethylene (PE), polypropylene (PP), polystyrene (PS), polymethyl methacrylate (PMMA), polyvinyl chloride (PVC), polyterephthalate of ethylene (PET), teflon (or polytetrafluoroethylene, PTFE), sodium polyacrylate (PANa), potassium polyacrylate (PAK) and polyamide, or combinations thereof.

According to particular embodiments, the coating is inorganic in nature, and comprises or is composed of alpha iron crystals, with a body-centered cubic crystalline structure, selected from the group consisting of magnetite (Fe₃O₄), hematite (Fe₂O₃), strontium hexaferrite (SrFe₁₂O₁₉), barium hexaferrite (BaFe₁₂O₁₉), metallic iron, neodymium iron boron (NdFeB) alloy, and stainless steels.

According to additional particular embodiments, the coating with magnetic properties for cladding structures is inorganic in nature, and comprises, or is composed of, cobalt oxides (CoO, Co₃O₄), manganese fluoride (MnF), metallic nickel or nickel aluminum cobalt alloys (AlNiCo).

According to further particular embodiments, the coating with magnetic properties for cladding structures has an inorganic/organic hybrid nature and comprises, or is composed of:
- a polymer selected from polyethylene (PE), polypropylene (PP), polystyrene (PS), polymethyl methacrylate (PMMA), polyvinyl chloride (PVC), polyethylene terephthalate (PET), teflon (or polytetrafluoroethylene, PTFE), sodium polyacrylate (PANa), potassium polyacrylate (PAK) and polyamide, or combinations thereof,
- and alpha iron crystals, with a body-centered cubic crystal structure, selected from the group consisting of magnetite (Fe₃O₄), hematite (Fe₂O₃), strontium hexaferrite (SrFe₁₂O₁₉), barium hexaferrite (BaFe₁₂O₁₉), metallic iron, neodymium iron boron alloy (NdFeB), and stainless steels.

According to further particular embodiments, the coating with magnetic properties for cladding structures has an inorganic/organic hybrid nature and comprises, or is composed of:
- a polymer selected from polyethylene (PE), polypropylene (PP), polystyrene (PS), polymethyl methacrylate (PMMA), polyvinyl chloride (PVC), polyethylene terephthalate (PET), teflon (or polytetrafluoroethylene, PTFE), sodium polyacrylate (PANa), potassium polyacrylate (PAK) and polyamide, or combinations thereof,
- and a material with magnetic properties selected from cobalt oxides (CoO, Co₃O₄), manganese fluoride (MnF), metallic nickel, neodymium alloy and nickel aluminum cobalt alloys (AlNiCo).

The present invention also refers to a coating structure comprising a support and the coating with ferro- or ferromagnetic properties of the invention, designed exclusively for said purpose. And preferably, the coating structure comprises the previously defined coating bonded to the support.

The support on which the coating is applied can be of a various nature, for example: metals, plastics, wood, paper, tiles, natural wood and imitation wood, mirrors, natural fibers, natural stone, textiles, ceramic substrates, non-porous ceramic substrates, porous, marble, gypsum boards, concrete or polished microcement boards, and polyurethane panels, where the ceramic substrates can be, for example, ceramic pieces, for example, tiles, etc.

The coating with magnetic properties of the invention can be used with supports such as ceramic substrates at high and low temperatures.

An further purpose of the present invention is to confer ferromagnetic/ferrimagnetic properties to a support such as ceramic tiles, for its potential magnetic adherence on surfaces with a magnetic field, by aligning their magnetic domains. The placement of the ferromagnetic layer, designed exclusively for said purpose, on the support, for example, a ceramic substrate will be carried out before firing, or after firing.

Another purpose of the present invention is, therefore, to provide the different cladding structures with magnetic adherence so that they can be arranged on surfaces capable of generating an intense magnetic field by alignment of their magnetic domains.

The present invention has as an additional object a magnetic adhesion system for cladding structures, comprising:
- the defined coating structure, formed by the support and the ferromagnetic coating of the invention,
- a magnetized sheet, preferably a sheet of magnetized vinyl material and
- a laminated gypsum surface on which the magnetized sheet is disposed,
wherein the coating structure is capable of being adhered by magnetic attachment on the magnetized sheet, preferably a sheet of magnetized vinyl material adhered to the surface of the laminated gypsum boards.

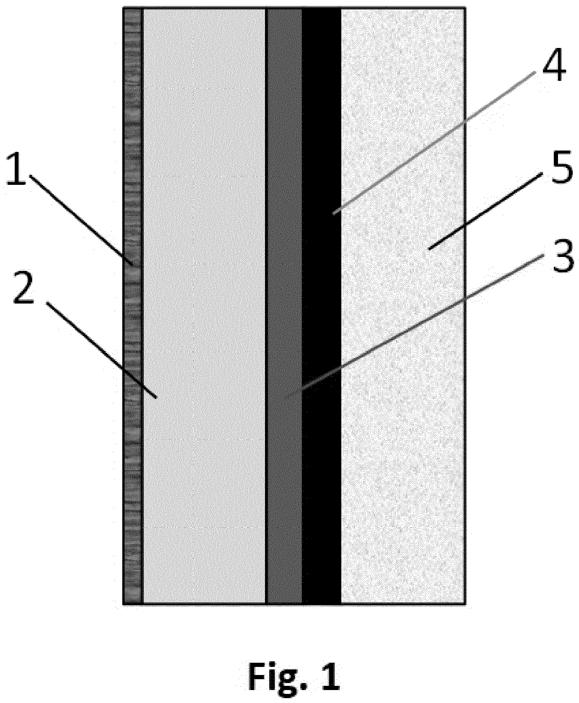

According to particular embodiments, the magnetic adhesion system comprises: laminated gypsum boards, a magnetized sheet, such as a sheet of magnetized vinyl material, the ferromagnetic coating, and the coating structure (bonded support and coating) intended to have reversible adherence (figure 1).

Laminated gypsum boards, as disclosed in document ES 1232466, have pairs of opposite, first and second faces; wherein the first faces are configured to rest on a surface of a floor or wall structural base, while the second faces are configured so that the ferromagnetic sheets rest on them (unlike document ES 1232466, where the galvanized iron sheets are used, while in the present invention the coating with the ferromagnetic coating is used on its back face).

Each of the structures or covering pieces comprises a support or decorative body, and the ferromagnetic coating of the invention in a single body, which is capable of being adhered by magnetic fixing on the magnetized sheet, such as the sheet of a magnetized vinyl material adhered on the surface of the laminated gypsum boards.

A further object of the present invention, is a method for obtaining the previously defined coating structure, which comprises applying the previously defined coating on a support at a temperature selected between: room temperature, at the average temperature at the exit of an the kiln [oven] comprising from 80 °C to 150 °C, or at high temperatures ranging from 700 °C to 1220 °C for subsequent heat treatment. It is also capable of being applied at temperatures between room temperature and 100 °C for subsequent heat treatment at temperatures between 700°C and 1220° C.

According to particular embodiments of the method, the coating with magnetic properties is a coating of an inorganic-organic hybrid nature with magnetic properties and is applied on a support that is a non-porous ceramic substrate, at room temperature, at medium temperature at the exit of the oven that
comprising from 80 °C to 150 °C, or at a high temperature that comprising from 700 °C to 1220 °C for subsequent heat treatment. It is also capable of being applied at temperatures between room temperature and 100 °C for subsequent heat treatment at temperatures between 700 °C and 1220 °C.

According to further particular embodiments of the method, the coating is applied on non-porous porcelain stoneware supports, preferably the stoneware support is previously decorated and treated at high temperature.

The present invention has as a further object the use of the coating with magnetic properties or the use of the cladding structures in the construction industry.

According to particular embodiments, the use of the coating with magnetic properties or the cladding structures refers to the use in an industrial production line, on all types of surfaces by means of at least some of the conventional application methods such as the enamelling, digital printing, roller application, or by aerodynamic techniques [airless], wherein the support and the magnetic coating are joined in a single body, without the need for interfaces, and similarly, the coating structure is attached to the magnetized sheet directly, by magnetic adherence and without the need for interfaces either.

The coating with magnetic properties (for example, ferromagnetic) is especially suitable for deposition on supports, for example, ceramic pieces, providing them with magnetic adherence, thus obtaining cladding structures that can be applied thanks to the magnetic coating of the invention, on surfaces capable of generating an intense and permanent magnetic field by alignment of their magnetic domains.

The present invention also refers to a method for the installation by magnetic adherence of coatings and/or flooring structures, comprising the coating with ferro- or ferromagnetic properties designed exclusively for said purpose.

The coating structure and the magnetic adhesion system of the present invention, allow the attachment [fixing] of plates to walls and floors by means of magnetic adherence, so that it is possible to quickly and cleanly install or remove the cladding structures, in both, during the first placement as well as in successive reinstatements, or restitutions, substitutions or replacements, which generates considerable savings in working hours, money necessary for the installation and the placement of these structures.

The coating on the support remains unchanged in time and maintains its original appearance allowing reuse of the cladding structures and preventing their breakage upon disassembly whereby no debris or waste material is generated, nor polluting gases by the transport of debris.

The coatings maintain their original appearance, both when they are installed for the first time, and alos when they are taken apart or removed, allowing the reuse of the cladding structures and avoiding their breakage, contrary to what happens conventionally.

The assembly of the structure of the invention makes it possible to be environmentally friendly, because it avoids breakage of the pieces, reduced the generation of debris, as well as the generation of polluting gases that would have been emitted by the machinery necessary to transport such debris to the landfill

In this magnetic adhesion system for cladding structures, unlike those existing in the state of the art, it is not necessary to use interfaces in order to adhere the ferromagnetic material and the substrate, which in a preferred application will show a rapid drying and hardening on the substrate on which it is placed.

In another preferred application, the ceramic coating and the ferromagnetic coating are joined together in a single body by heat treatment at the optimal firing temperatures used for this purpose.

### Description of the drawings

Figure 1 shows a sectional diagram of the installation system of the invention, comprising:
   - a coating structure (1), comprising
      - the support or decorative body (2),
      - the coating of the invention (3),
   - a magnetized sheet (4),
   - a laminated gypsum board (5).
Figure 2 shows an image of the magnetic coating (3) of the invention, applied on the opposite side to the decoration by means of digital printing.

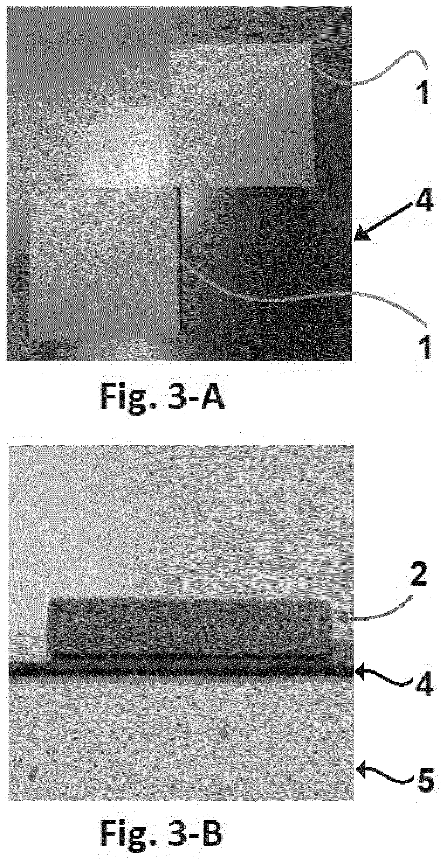

Figure 3-A shows a front view of the installation system with two ceramic pieces (5x5 cm) (1), magnetically adhered onto a magnetized sheet (4), as described in figure 1.
Figure 3-B shows a cross-sectional view of image 3-A where the laminated gypsum board (5) can be seeing located behind the magnetized sheet (4), and the support or decorative body, in this case, the ceramic pieces (2) magnetically adhered to the magnetized sheet (4), as described in figure 1.
Figure 4 is an X-ray diffraction of the surface of an example of a magnetic coating of the invention, after heat treatment.
Figure 5 is an image of an example coating of the invention with magnetic properties under the effect of an external magnetic field.
Figure 6 is an X-ray diffraction of the surface of the magnetic coating of the invention, after heat treatment.

### Preferred embodiments

According to particular embodiments, for the preparation and production of the inorganic, glass-ceramic coating of the invention, the following is used: between 20% and 80%, according to more particular embodiments, between 40% and 80%, from the group of the magnetic inorganic materials described above, between 5% and 40% by weight of a frit, such as that described in Table 1 and between 0% and 30% of the different base materials selected from silicon oxide, zirconium silicate, aluminum oxide, zinc oxide, silicon nitride, calcium carbonate, cerium oxide, mullite, kaolin, sodium feldspar, wollastonite, nepheline, praseodymium oxide, barium oxide, boron oxide, magnesium carbonate, clay, strontium carbonate, silicon carbide and industrial residues, are ground in a wet process together with the necessary additives, these being carboxymethylcellulose and sodium tripolyphosphate, in quantities of between 0% and 2% with respect to the aqueous suspension, also including the necessary preservative.

According to further particular embodiments, preferably between 50% and 80% of magnetic materials are used, between 5% and 20% of the frit described in Table 1 and between 5% and 20% of the different base materials mentioned in the previous paragraph, are ground in a wet process together with the necessary additives, these being carboxymethylcellulose and sodium tripolyphosphate, in quantities of between 0% and 2% with respect to the aqueous suspension, also including the necessary preservative.

The resulting suspension is rheologically conditioned and applied to a support, for example, porcelain stoneware, for subsequent heat treatment at high temperatures, such as 700 °C and 1220 °C, obtaining a thin layer of the glass-ceramic material.

Density and viscosity are the most relevant magnitudes of enamel suspensions. The values that these parameters should have will depend directly on the specific enamel application system to be used in each particular case, but in any case they must be such that they ensure obtaining a consolidated layer of dry enamel with adequate characteristics.

In the present invention, the resulting suspension preferably has density values between 1.65 and 2.3 g/cm³, depending on its method of application, and according to other particular embodiments, it has density values between 1.85 and 2.3 g/cm³.

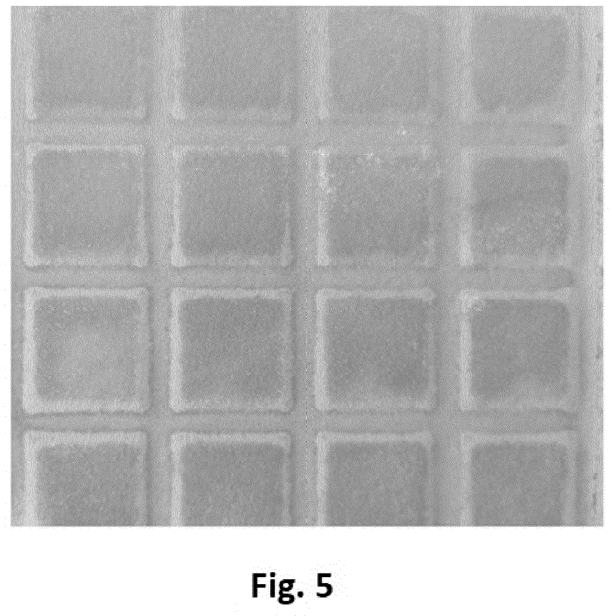

The heat treatment is carried out in industrial firing cycles lasting between 30 to 90 minutes and at a temperature of 700°C and 1220°C. The ceramic glaze resulting from this heat treatment has a dark appearance (see figure 5) with magnetic properties under the effect of an external magnetic field.

**Table 1. Percentage by weight of equivalent oxides of the frit used**

| Frit composition | |
|---|---|
| | % by weight with respect to the total weight of the frit |
| SiO₂ | 20-75 |
| BaO | 0-5 |
| Al₂O₃ | 3-20 |
| CaO | 1-31 |
| Na₂O | 1-15 |
| K₂O | 1-7 |
| ZrO | 0-19 |
| B₂O₃ | 0-14 |
| ZnO | 0-5 |
| MgO | 0-3 |
| PbO | 0-2 |
| P₂O₅ | 0-1 |
| Fe₂O₃ | 0-2 |
| CeO₂ | 0-2 |
| MnO | 0-2 |
| TiO₂ | 0-1 |
| SrO | 0-10 |

According to further particular embodiments, the equivalent oxides of the frit are: Frit composition

| Composición de la frita | |
|---|---|
| | % by weight with respect to the total weight of the frit |
| SiO₂ | 20-65 |
| BaO | 0-5 |
| Al₂O₃ | 5-20 |
| CaO | 8-31 |
| Na₂O | 1-15 |
| K₂O | 1-7 |
| ZrO | 0-10 |
| B₂O₃ | 0-5 |
| ZnO | 0-5 |
| MgO | 0-3 |
| PbO | 0-2 |
| P₂O₅ | 0-1 |
| SrO | 0-10 |

Another preferred application of the invention is the deposition of the ferromagnetic coating on the ceramic substrate after heat treatment at high temperature. For the preparation of this preferred application, an organic/inorganic hybrid mixture capable of adhering to the support is prepared, in this case a non-porous ceramic substrate, provided with magnetic properties.

According to particular embodiments, the preparation of the inorganic-organic mixture for the magnetic coating is carried out with a percentage by weight of between 20%-80%, according to further embodiments between 40%-80% by weight, of the polymers described above, and 40%-80% by weight of the inorganic materials described above. Additionally, between a percentage by weight of between 5% - 40% of water can be added.

The mixture of these organic-inorganic materials is carried out by stirring and/or grinding, for a period between 1 minute and 300 minutes, for example, between 1 minute and 20 minutes, depending on the proportions, the necessary granulometry and the total quantity of mixture.

The suspension resulting from the previous mixture is rheologically conditioned and applied to a support of a support, such as a previously fired porcelain stoneware, obtaining a ferromagnetic layer with adequate adherence.

In a preferred embodiment, this application of the coating on the support can be carried out at the exit of the oven or previously heated, at a temperature between 80°C and 150°C, with a drying time between 5 and 15 seconds. In another preferred embodiment, this application of the coating on the support can be carried out on a support, such as a ceramic substrate at room temperature, with a drying time between 5 and 30 seconds.

The methods of applying the ferromagnetic coating of the invention will be determined by the characteristics of the support where it is applied, being able to be applied by means of conventional methods in an enameling line, such in an application of the filera / bell type. In the bell, the enamel is pumped from the container that contains it, into a reservoir lying on top of the bell. Said deposit allows the suspension to fall by gravity on the surface of the bell, forming a continuous curtain that is deposited onto the desired substrate.

It is also capable of being applied by means of other known techniques in the field of the ceramic industry, such as for example, digital printing, application by means of rollers, or by means of aerodynamic techniques [airless].

In a preferred embodiment, the necessary curing/drying techniques after applying the coating can be coupled to the industrial application line, uniting the support and the coating in a single body, which is the coating structure as such.

In another preferred embodiment, to the industrial application techniques described above, a system and/or several systems capable of producing a permanent magnetization of the coating with particles of high magnetic permeability can be coupled.

The nature of the support and the need or not for subsequent heat treatment will be critical factors in determining the application method of the ferromagnetic coating of the invention.

The magnetic adhesion system of the invention comprises the advantages of:
- constituting an installation that is reversible, simple, and fast, and environmentally sustainable (reduces debris, transportation - gasoline, energy, etc.).
- decreasing hours of work, noises, dust, debris.
- reducing the transportation of debris as well as the discomfort associated with traditional title / ceramic installation

The tests carried out with the system of the invention, according with the current regulations and standards, have confirmed the excellent durability, adherence and resistance to different factors showed in the new magnetic coating - or enamel, in addition to being a completely innocuous system for both electronic equipment and people with pacemakers.

The installation of these ceramic pieces / tiles, incorporating the developed ferromagnetic coating, will also allow for a simple, functional and ecological replacement system.

### EXAMPLES

### Example 1: Digital application of the coating on ceramic substrate and magnetic adhesion system.

Considering the numbering adopted in figure 1, the coating structure for walls and floors (1), which has a support or decorative body (2), such as a ceramic glaze, and a ferromagnetic coating (3), with a thickness of about 0.1mm. This coating structure is fixed by magnetic adherence on a magnetized sheet, which in this case is a sheet of magnetized vinyl (4), which is fixed by adhesive to a laminated gypsum board (5).

The support or decorative body (2) can be of a ceramic nature, or it can be of a different nature, as explained above.

The application of the ferromagnetic coating of the invention was carried out on the back face of a ceramic tile as a support, previously fired with the corresponding coating, in this case a ceramic glaze. The application was made by digital printing, on a white paste ceramic piece. In this example, the DigiGlaze 4.0 developed by Tecnoltalia was used.

The ferromagnetic coating was an inorganic-organic hybrid, such as the one described in example 4, having a density of 1.81 g/cm³, a viscosity of 15 seconds (4 mm Ford cup) and the grammage applied was 530 g/m². The working conditions of the DigiGlaze 4.0 were a pressure of 0.7 bars, a speed of 25 m/min and a pitch of 2.1.

The drying and hardening time for this coating was about 5 seconds.

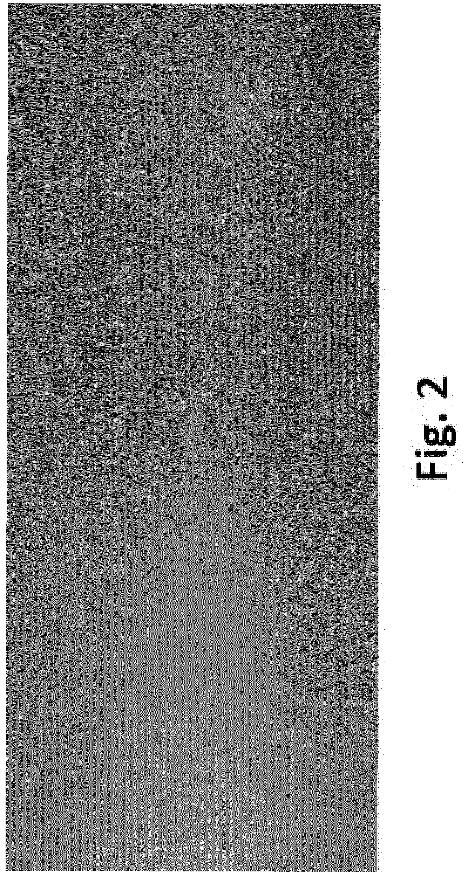

Referring to figure 2, it shows the aspect of the magnetic coating (3), as applied on the side opposite to the decoration, using this application technique.

### Example 2: Glass-ceramic coating provided with magnetic properties at high firing temperatures.

For the preparation of the magnetic coating, the raw materials are initially dosed as shown in Table 2 below, where stainless steel and the families of stainless steels, called ferritic steels, are considered magnetic material, and that exhibit magnetism whereby they are recognized as magnetic materials,and which also exhibit magnetism and therefore they are recognized as magnetic materials, for example in this case, stainless steel, magnetite, strontium hexaferrite and hematite. In addition, other types of steels, at high firing temperatures, may exhibit some alpha iron decomposition, which will exhibit magnetic attraction against permanent magnets.

**Table 2. Dosing of the raw materials used to obtain an inorganic (glass ceramic) coating of the invention at high temperatures**

| Raw materials | coating of the invention (% by weight) |
|---|---|
| Frit A | 19.55 |
| Clay | 10 |
| Nepheline | 5 |
| Stainless steel | 50 |
| Magnetite | 5 |
| Zirconium silicate | - |
| Hematite | 5 |
| Strontium hexaferrite | 5 |
| Sodium tripolyphosphate | 0.2 |
| Carboxymethylcellulose | 0.2 |
| Preservative | 0.05 |

The weight percentage of equivalent oxides of frit A is shown in the following table.

**Table 3. Percentage by weight of equivalent oxides of the frit used**

| % equivalent oxides | Frit A |
|---|---|
| SiO₂ | 63.5 |
| Al₂O₃ | 6.65 |
| Fe₂O₃ | 0.09 |
| Na₂O | 3.21 |
| K₂O | 4.71 |
| MnO | <0.01 |
| MgO | 0.90 |
| CaO | 3.12 |
| P₂O₅ | <0.01 |
| SrO | 0.07 |
| TiO₂ | 0.04 |
| BaO | 0.04 |
| ZnO | 4.03 |
| ZrO₂ | 11.01 |
| PbO | <0.01 |
| B₂O₃ | 2.51 |
| CeO₂ | <0.01 |
| ppc* | 0.08 |
| *loss on ignition | |

The stainless steel used is type 316 austenitic chrome-nickel with molybdenum, from residues from the metallurgical industry. For its use, a previous cleaning and purification treatment has been carried out.

Subsequently, the ground in a wet process of the raw materials was carried out in an alumina ball mill, with a 75% solid content and 25% water for 20 minutes. The barbotins were rheologically conditioned and bell applied to a previously fired and decorated piece of porous white paste, on the side opposite to the decoration.

The application grammage was about 630 g/m². The rheological conditioning of the viscosity was performed using a 4 mm Ford cup, adjusting the viscosity at 45 seconds.

The pieces obtained were subjected to firing in a single-channel roller kiln in a 50-minute cycle at a maximum temperature of 1080 °C for 7 minutes.

Referring to figure 4, X-ray diffraction of the surface of the magnetic coating of the invention is shown, after heat treatment. The diffraction peaks associated with the presence of crystals of zirconium silicate (ZrSiO₄), chromium oxide (Cr₂O₃) and iron with a cubic structure are observed.

Referring to figure 5, the aspect of the magnetic coating applied to the part opposite to the decoration is shown. The coating exhibited magnetic attraction by action of an external magnetic field.

### Example 3 Coating with magnetic properties at low cooking temperatures.

For the preparation of the magnetic coating, the raw materials are initially dosed as shown in the following table 4.

**Tabla 4. Dosing of the raw materials used to obtain the coating of the invention at low temperatures**

| Raw materials | Coating of the invention (% by weight) |
|---|---|
| Frit B | 27.05 |
| Clay | 5.5 |
| Stainless steel | 0 |
| Magnetite | 3 |
| Zirconium silicate | 1 |
| Hematite | 23 |
| Strontium hexaferrite | 40 |
| Sodium tripolyphosphate | 0.2 |
| Carboxymethylcellulose | 0.2 |
| Preservative | 0.05 |

The weight percent of equivalent oxides of frit B is shown in the following table.

**Table 5. Percentage by weight of equivalent oxides of the used frit used**

| % equivalent oxides | Frit B |
|---|---|
| SiO₂ | 72.5 |
| Al₂O₃ | 3.1 |
| Fe₂O₃ | 0.01 |
| Na₂O | 4.21 |
| K₂O | 2.67 |
| MnO | <0.01 |
| MgO | 0.90 |
| CaO | 1.97 |
| P₂O₅ | <0.01 |
| SrO | 0.07 |
| TiO₂ | 0.04 |
| BaO | 0.04 |
| ZnO | 3.13 |
| ZrO₂ | 0.16 |
| PbO | <0.01 |
| B₂O₃ | 10.96 |
| CeO₂ | <0.01 |
| ppc* | 0.08 |
| *loss on ignition | 0.12 |

Subsequently, the wet milling of the raw materials was carried out in an alumina ball mill, with a 75% solid content and 25% water for 20 minutes. The barbotins were rheologically conditioned and bell applied to a previously fired and decorated piece of porous white paste, on the side opposite to the decoration.

The application grammage was about 630 g/m². The rheological conditioning of the viscosity was performed by a 4 mm Ford cup, adjusting the viscosity at 45 seconds.

The pieces obtained were subjected to firing in a single-channel roller kiln in a 50-minute cycle at a maximum temperature of 700 °C for 7 minutes.

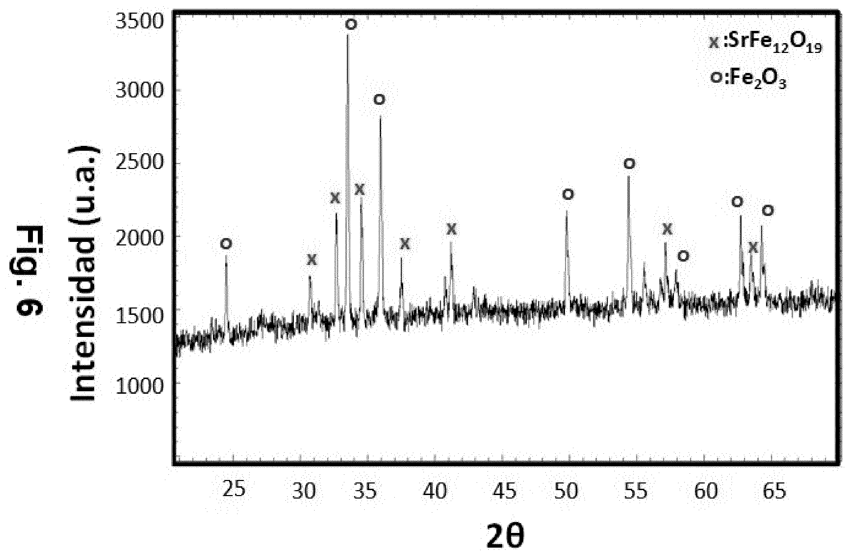

Referring to figure 6, X-ray diffraction of the surface of the magnetic coating of the invention is shown, after heat treatment. The diffraction peaks associated with the presence of strontium hexaferrite crystals (SrFe₁₂O₁₉), as well as iron (Fe₂O₃) in the form of hematite, are observed. The coating exhibited magnetic attraction by action of an external magnetic field.

### Example 4: Inorganic-organic hybrid coating with magnetic properties

For the elaboration of the organic-inorganic magnetic mixture, initially the dosage of the raw materials was carried out. The following table shows the components to be mixed for the magnetic coating of the invention.

**Table 6. Raw materials used to obtain the mixture of the invention**

| Raw materials | Hybrid organic-inorganic mix (% by weight) |
|---|---|
| Polimero acrilico | 28 |
| Magnetita | 65 |
| Agua | 7 |

Subsequently, the components were mixed by stirring. Once the components were mixed, the mixture was applied to the lower part of previously fired and decorated ceramic pieces, using a silicone roller on the production line.

The application grammage was about 500 g/m 2. The rheological conditioning of the viscosity was performed by a 4 mm Ford cup, adjusting the viscosity at 25 seconds.

The application of this inorganic-organic mixture can be carried out after leaving the roller kiln at temperatures between 70 and 150 °C, by means of a conventional enamelling filera / bell application.

In another preferred application, the magnetic mixture can be applied in pieces at room temperature.

## Claims

1. Coating with magnetic properties for cladding structures, **characterized in that** it comprises:
- a frit,
- one or more base materials,
- an inorganic material having magnetic properties.

2. The coating according to claim 1, **characterized in that** it comprises an inorganic material with magnetic properties selected from:
- a material comprising alpha iron crystals, with a body-centered cubic crystal structure, selected from the group consisting of magnetite (Fe₃O₄), hematite (Fe₂O₃), strontium hexaferrite (SrFe₁₂O₁₉), barium hexaferrite (BaFe₁₂O₁₉), metallic iron, neodymium iron boron alloy (NdFeB), and stainless steels,
- an inorganic material of a metallic nature lacking of iron, selected from:
• cobalt oxides (CoO, Co₃O₄),
• manganese fluoride (MnF),
• metallic nickel,
• nickel aluminum cobalt alloys (AlNiCo).

3. The coating according to claim 1, **characterized in that** it further comprises an organic component.

4. The coating according to one of the preceding claims, **characterized in that** it further comprises an organic component, which is a polymer selected from polyethylene (PE), polypropylene (PP), polystyrene (PS), polymethyl methacrylate (PMMA), polyvinyl chloride (PVC), polyethylene terephthalate (PET), teflon (or polytetrafluoroethylene, PTFE), sodium polyacrylate (PANa), potassium polyacrylate (PAK) and polyamide, or combinations thereof.

5. The coating according to one of the preceding claims 1 to 3, **characterized in that** it comprises or is composed of alpha iron crystals, with a body-centered cubic crystalline structure, selected from the group consisting of magnetite (Fe₃O₄), hematite (Fe₂O₃), strontium hexaferrite (SrFe₁₂O₁₉), barium hexaferrite (BaFe₁₂O₁₉), metallic iron, neodymium iron boron alloy (NdFeB), and stainless steels,

6. The coating according to one of the preceding claims 1 to 3, **characterized in that** it comprises or consists of cobalt oxides (CoO, Co₃O₄), manganese fluoride (MnF), metallic nickel or nickel aluminum cobalt alloys (AlNiCo).

7. The coating according to one of the preceding claims 1 to 3, **characterized in that** it comprises, or is composed of:
- a polymer selected from polyethylene (PE), polypropylene (PP), polystyrene (PS), polymethyl methacrylate (PMMA), polyvinyl chloride (PVC), polyethylene terephthalate (PET), teflon (or polytetrafluoroethylene, PTFE), sodium polyacrylate (PANa), potassium polyacrylate (PAK) and polyamide, or combinations thereof,
- and alpha iron crystals, with a body-centered cubic crystal structure, selected from the group consisting of magnetite (Fe₃O₄), hematite (Fe₂O₃), strontium hexaferrite (SrFe₁₂O₁₉), barium hexaferrite (BaFe₁₂O₁₉), metallic iron, neodymium iron boron alloy (NdFeB), and stainless steels.

8. The coating according to one of the preceding claims 1 to 3, **characterized in that** it comprises or is composed of:
- a polymer selected from polyethylene (PE), polypropylene (PP), polystyrene (PS), polymethyl methacrylate (PMMA), polyvinyl chloride (PVC), polyethylene terephthalate (PET), teflon (or polytetrafluoroethylene, PTFE), sodium polyacrylate (PANa), potassium polyacrylate (PAK) and polyamide, or combinations thereof,
- and a material with magnetic properties selected from cobalt oxides (CoO, Co₃O₄), manganese fluoride (MnF), metallic nickel, neodymium alloy, and nickel aluminum cobalt alloys ((AlNiCo).

9. The coating according to one of the preceding claims, **characterized in that** it comprises between 45 and 85%, preferably between 50 and 80% of magnetic materials, between 3% and 27%, preferably between 5 and 20% of frit, and between 3 % and 23%, preferably 5% and 20% of base materials, with respect to the total weight of the coating.

10. The coating according to claim 1, **characterized in that** it comprises alpha iron or ferrite crystals, wherein the position of the atoms is a body-centered cubic crystalline arrangement system, wherein the glass-ceramic can be inorganic or hybrid inorganic/organic in nature, depending on the desired application and on the firing temperature of the ceramic pieces.

11. The coating structure comprising the coating as defined in any one of the preceding claims.

12. The coating structure according to claim 11, **characterized in that** it comprises the coating defined in any one of the preceding claims fixed to a support.

13. The coating structure according to claim 12, **characterized in that** the support is selected from metals, plastics, wood, paper, tiles, natural wood and imitation wood, mirrors, natural fibers, natural stone, textiles, ceramic substrates, non-porous ceramic substrates, marble, gypsum boards, concrete, polished microcement, and polyurethane panels.

14. A magnetic adhesion system for cladding structures comprising:
- the coating structure defined in claim 11, formed by the support and the ferromagnetic coating defined in one of claims 1 to 10,
- a magnetic sheet, preferably a sheet of magnetized vinyl material and
- a laminated gypsum surface on which the magnetized sheet is disposed,
wherein the coating structure is capable of being adhered by magnetic fixing on the magnetized sheet, preferably a sheet of magnetized vinyl material adhered to the surface of the laminated gypsum boards.

15. Use of the coating with magnetic properties or cladding structures in the construction industry.

16. The use according to the preceding claim in an industrial production line by means of at least one of the application methods selected from the enameling bell method, digital printing, roller application, or by aerographic techniques [airless].
